# EUROPEAN PATENT SPECIFICATION

(11) **EP 0 753 182 B1**
(45) Date of publication and mention of the grant of the patent: **18.11.1998**
(21) Application number: 95913280.4
(22) Date of filing: 31.03.1995
(51) Int. Cl.: G06T 15/10

(54) **TEXTURE MAPPING IN 3-D COMPUTER GRAPHICS**
TEXTURABBILDUNG IN 3-D-RECHNERGRAPHIK
MAPPAGE DE TEXTURE UTILISE EN INFOGRAPHIE TRIDIMENSIONNELLE

(30) Priority: 31.03.1994 GB 9406512
(43) Date of publication of application: 15.01.1997
(73) Proprietor: ARGONAUT TECHNOLOGIES LIMITED, London NW9 5ER (GB)
(72) Inventor: DAY, Michael, Robin, London N11 1JS (GB); GRAHAM, Carl, London E4 7ET (GB)
(74) Representative: Williams, John Francis
(86) International application number: GB9500748
(87) International publication number: WO9527265

(56) References cited:
- IEEE COMPUTER GRAPHICS AND APPLICATIONS, vol. 6, no. 9, September 1986 NEW YORK US, pages 40-53, XP 000004804 BIER AND SLOAN 'TWO-PART TEXTURE MAPPING'
- EUROGRAPHICS, 2 September 1991 - 6 September 1991 AMSTERDAM NL, pages 385-396, XP 000300282 ABI-EZZI AND SHIRMAN 'TESSELATION OF CURVED SURFACES UNDER HIGHLY VARYING TRANSFORMATIONS'

## Description

This invention relates to Texture Mapping in 3-D Computer Graphics.

In order to present a screen image actually in two dimensions (2-D) which will be taken as a correct view of a three dimensional (3-D) object, the object is first defined by a programmer as a series of coordinates (x,y,z) in space. The object as seen at any instant is then derived by algorithms in the computer in the form of a series of 2-D coordinates (x,y), such that any point of that image is a projection of a point in space with x, y and z coordinates. Since an object surface is defined by a series of vertices which locate the outermost limits of the image of that surface, a computer would draw such an image as an outline only, which for realism has to be filled in, i.e. given a 'texture' representing surface detail, colour and illumination.

In practice this is done by transferring a pre-stored image of the texture to the outline. This is called 'texture mapping'. Since the surface for realism has to appear to recede in the z direction, so must the texture. The task is thus to map the texture from a textured source, i.e. the envisaged 3-D object, onto a 2-D perspective projection of a 3-D polygon (the general term used for a specified area of surface on the object). Texture mapping is usually performed pixel-by-pixel along a scan line of the screen. The mapping of source texture to bitmap pixels needs to be done in such a way that the image looks to be in true perspective.

Current scan-line texture mapping techniques are:

True perspective texture mapping, which requires 2 mathematical divides per pixel to calculate source texture coordinates.

Quadratic interpolation of source texture coordinates across destination polygon. The quadratic coefficients are calculated from the correct texture coordinates at the mid point of the scan line or edge.

Quadratic interpolation on subdivided polygons.

Simple warp mapping, which involves linear interpolation of source texture coordinates across destination polygon.

Warp mapping with subdivision of source polygon into equal parts before projection.

IEEE Computer graphics and applications, Vol.6 no. 9, September 1986, New York (US); in an article by E. Bier et al entitled "Two-part texture mappings" discloses a two-part texture mapping system with one part possibly being a warp mapping.

The problem is that the above techniques are too slow for use on home micro-computers at real time frame rates (i.e. high enough rates to give near-smooth movement of animated 3-D images), or do not give enough perspective effect. Such computers, used extensively for computer games for example, have limited memory, processor power and graphics performance.

Accordingly, the present invention proposes a texture mapping process for computer graphics as specified in claim 1.

The invention also extends to an imaging system for applying texture to a displayed object by the process herein described. The apparatus includes the means necessary to carry out the described process steps and may be in hardware or software form or in any combination thereof. These means will be apparent to the skilled reader from the teachings herein.

In order that the invention shall be clearly understood, an exemplary embodiment of the technique will now be described.

This starts with a texture map polygon defined in 3-D view space by:
Header:
   - N: Number of vertices
   - P: Pointer to texture map image data
Vertices:
   X,Y,Z,U,V z-distance from view plane
   U,V are texture coordinates
   ...
   X,Y,Z,U,V

The above data format and subroutines to work on it are shared with the 3-D texture map clipper.

### Stage 1:

Scan the vertex list to calculate the ratio of far to near z, then compare the result with a set threshold. When this ratio approaches 3, the system performs a subdivision but this figure is a compromise between speed and image quality and this threshold could be adjusted to help maintain a constant frame rate.

If the threshold is not exceeded then proceed to draw polygon using simple scan line warp mapping, or quadratic mapping.

### Stage 2:

Calculate z plane use, to subdivide polygon into 2 new polygons. The simplest case is to sub-divide at one quarter of way from near z to far z. This will be near to half way across the projected polygon when the ratio of near to far z is approaching 3.

### Stage 3:

Call 3-D clipper to clip view of space polygon into 2 new polygons at specified plane of constant z.

### Stage 4:

Draw the far polygon and pass the near polygon back to stage 1 to check ratio of z etc. and iterate stages 2 to 4.

In practice it would be possible at stage 2 to subdivide into more than 2 polygons, and at stage 4 to pass more than one polygon back to stage 1. The practical effect of this technique is that the new edge generated between any two new polygons is parallel to the view projection plane. So along this edge, the texture coordinates change linearly in the projected polygon. This makes simple warp mapping correct along these new edges. This gives a large amount of perspective correction for each subdivision of the polygon. Thus, a smaller number of subdivisions need to be done producing a smaller number of polygons. As overheads can be a large proportion of the time taken to draw a polygon, this can give a speed improvement over normal subdivision.

This technique does not require the texture to be the same shape as the source polygon because we are just improving the perspective effect on warp mapping. The threshold for subdivision can be adjusted in real time to give fairly smooth changes of image quality and frame rate.

The technique according to the invention produces a substantially improved perspective rendering of surfaces using limited processing power. It allows better moving images in real time than heretofore, and is particularly useful in computer games programs intended to run on hardware of restricted speed, memory, etc. The technique substantially reduces the volume of mathematical processing, particularly division, which is required.

## Claims

1. A texture mapping process for computer graphics including the steps of determining an image to be displayed as a series of destination polygons, identifying the or each image object to be displayed as one or more textured source polygons, subdividing the or each textured source polygon of an object along planes of constant distance from a viewing position to produce a plurality of sub-polygons which meet along a line of constant distance from the viewing position, and rendering the resulting sub-polygons onto the destination polygons of the image by simple warp mapping involving linear interpolation of source texture coordinates of the textured source polygon or polygons across each of the sub-polygons.

2. A process according to claim 1, comprising the steps of scanning the vertices of a polygon, determining from the list a vertex distance ratio as the ratio of the furthest distance from the viewing position to the closest distance, comparing the ratio with a predetermined threshold, when the ratio exceeds the predetermined threshold subdividing the polygon into one or more sub-polygons.

3. A process according to claim 2, wherein the threshold level is approximately 3.

4. A process according to claim 2 or 3, wherein the polygon is subdivided at one quarter of way from the closest to the furthest distance from the viewing position.

5. A process according to claim 2, 3 or 4, wherein the polygon is subdivided by calling a 3-D clipper algorithm to divide the polygon into two or more new sub-polygons, at least one of the new subpolygons being disposed in a specified plane of substantially constant distance from the viewing position.

6. A process according to claim 5, comprising the step of rendering the subpolygon or subpolygons of substantially constant distance from the viewing position and recalculating the vertex distance ratio for the or each other subpolygon to determine whether division thereof is required.

7. A process according to claim 5 or 6, wherein the subpolygon furthest from the viewing position is drawn first and the vertex distance ratio for the or each other subpolygon is recalculated.

8. A process according to any one of claims 5 to 7, wherein each polygon and subpolygon is divided until the vertex distance ratio of each subpolygon is less than the threshold level.

9. A process according to any one of claims 2 to 8, wherein when the ratio does not exceed the threshold level, the polygon is drawn using simple scan line warp mapping, or quadratic mapping.

## Patentansprüche

1. Ein Texturabbildungsverfahren für Computergrafiken, mit folgenden Schritten: Bestimmen eines Bildes, das angezeigt werden soll, als Serie von Zielpolygonen, Identifizieren des oder jedes Bildobjekts, das angezeigt werden soll, als ein texturiertes Quellenpolygon oder als mehrere texturierte Quellenpolygone, Unterteilen des oder jedes texturierten Quellenpolygons eines Objekts entlang Ebenen mit einem konstanten Abstand von einer Betrachtungsposition, um eine Mehrzahl von Teilpolygonen zu erzeugen, die entlang einer Linie mit konstantem Abstand von der Betrachtungsposition zusammentreffen, und Aufbereiten der sich ergebenden Teilpolygone auf die Zielpolygone des Bildes durch einfaches Wölbungsabbilden, das eine lineare Interpolation von Quellentexturkoordinaten des texturierten Quellenpolygons oder der Polygone über jedes der Teilpolygone beinhaltet.

2. Ein Verfahren gemäß Anspruch 1, mit folgenden Schritten: Abtasten der Scheitelpunkte eines Polygons, Bestimmen, aus der Liste, eines Scheitelpunktabstandverhältnisses als das Verhältnis des weitesten Abstandes von der Betrachtungsposition zu dem geringsten Abstand, Vergleichen des Verhältnisses mit einer vorbestimmten Schwelle, und Unterteilen des Polygons in eines oder mehrere Teilpolygone, wenn das Verhältnis die vorbestimmte Schwelle übersteigt.

3. Ein Verfahren gemäß Anspruch 2, bei dem der Schwellenpegel ungefähr 3 beträgt.

4. Ein Verfahren gemäß Anspruch 2 oder 3, bei dem das Polygon bei einem Viertel des Wegs von dem geringsten zu dem weitesten Abstand von der Betrachtungsposition unterteilt wird.

5. Ein Verfahren gemäß Anspruch 2, 3 oder 4, bei dem das Polygon durch Aufrufen eines 3-D-Abschneide-Algorithmus unterteilt wird, um das Polygon in zwei oder mehr neue Teilpolygone zu unterteilen, wobei zumindest eines der neuen Teilpolygone in einer spezifizierten Ebene mit einem im wesentlichen konstanten Abstand von der Betrachtungsposition angeordnet wird.

6. Ein Verfahren gemäß Anspruch 5, mit folgendem Schritt: Aufbereiten des Teilpolygons oder der Teilpolygone mit im wesentlichen konstantem Abstand von der Betrachtungsposition und Neuberechnen des Scheitelpunktabstandverhältnisses für das oder jedes weitere Teilpolygon, um zu bestimmen, ob eine Unterteilung derselben erforderlich ist.

7. Ein Verfahren gemäß Anspruch 5 oder 6, bei dem das Teilpolygon, das am weitesten von der Betrachtungsposition entfernt ist, als erstes gezeichnet wird und das Scheitelpunktabstandsverhältnis für das oder jedes weitere Teilpolygon erneut berechnet wird.

8. Ein Verfahren gemäß einem der Ansprüche 5 bis 7, bei dem jedes Polygon oder Teilpolygon unterteilt wird, bis das Scheitelpunktabstandsverhältnis jedes Teilpolygons kleiner als der Schwellenpegel ist.

9. Ein Verfahren gemäß einem der Ansprüche 2 bis 8, bei dem das Polygon unter Verwendung einer einfachen Abtastlinienwölbungsabbildung oder einer quadratischen Abbildung gezeichnet wird, wenn das Verhältnis den Schwellenpegel nicht übersteigt.

## Revendications

1. Procédé de mappage de texture pour infographie comprenant les étapes de déterminer une image à visualiser en tant qu'une série de polygones de destination, d'identifier le ou chaque image objet à visualiser en tant qu'un ou plusieurs polygones de source texturés, de subdiviser le ou chaque polygone de source texturé d'un objet le long de plans de distance constante d'une position de visualisation pour produire un certain nombre de sous-polygones qui se rencontrent le long d'une ligne de distance constante à partir de la position de visualisation et de rendre les sous-polygones résultants sur les polygones de destination de l'image par simple mappage de chaîne impliquant une interpolation linéaire des coordonnées de texture de source du polygone de source texturé ou des polygones à travers chacun des sous-polygones.

2. Procédé selon la revendication 1, comprenant les étapes d'explorer les sommets d'un polygone, de déterminer, à partir de la liste, un rapport de distance des sommets en tant que le rapport de la plus grande distance à partir de la position de visualisation à la plus courte distance, de comparer le rapport avec un seuil prédéterminé, quand le rapport dépasse le seuil prédéterminé, de subdiviser le polygone en un ou plusieurs sous-polygones.

3. Procédé selon la revendication 2, où le niveau de seuil est d'environ 3.

4. Procédé selon la revendication 2 ou 3, où le polygone est subdivisé à un quart du chemin à partir de la distance la plus proche jusqu'à la plus éloignée de la position de visualisation.

5. Procédé selon la revendication 2, 3 ou 4, où le polygone est subdivisé en appelant un algorithme écréteur tridimensionnel pour diviser le polygone en deux nouveaux sous-polygones ou plus, au moins l'un des nouveaux sous-polygones étant disposé dans un plan spécifié de distance sensiblement constante à partir de la position de visualisation.

6. Procédé selon la revendication 5, comprenant l'étape de rendre le sous-polygone ou les sous-polygones à une distance sensiblement constante par rapport à la position de visualisation et de recalculer le rapport de distance des sommets pour le ou chaque sous-polygone pour déterminer si une division est requise.

7. Procédé selon la revendication 5 ou 6, où le sous-polygone le plus éloigné de la position de visualisation est tracé d'abord et le rapport de distance des sommets pour le ou chaque sous-polygone est recalculé.

8. Procédé selon l'une quelconque des revendications 5 à 7, où chaque polygone et sous-polygone est divisé jusqu'à ce que le rapport de distance des sommets de chaque sous-polygone soit plus petit que le niveau de seuil.

9. Procédé selon l'une quelconque des revendications 2 à 8, où, quand le rapport ne dépasse pas le niveau de seuil, le polygone est tracé en utilisant un simple mappage de chaîne des lignes, d'exploration ou un mappage quadratique.
